# EUROPEAN PATENT APPLICATION

(11) **EP 3 002 213 A1**
(43) Date of publication of application: **06.04.2016**
(21) Application number: 14275211.2
(22) Date of filing: 03.10.2014
(51) Int. Cl.: B64C 25/40

(54) **Aircraft taxiing system**

(71) Applicant: Goodrich Actuation Systems Ltd., West Midlands B90 4LA (GB)
(72) Inventor: Kracke, Jeremy A.G., Stone, Staffordshire ST15 8FG (GB)
(74) Representative: Leckey, David Herbert

(57) **Abstract**

An aircraft taxiing system includes a drive wheel (20), mounted between the wheels of an aircraft's landing gear (4). The drive wheel (20) is selectively deployable through an actuation system (30) into a position in which it engages the ground in order to move the aircraft. The drive wheel (20) incorporates a hub motor (26).

## Description

### TECHNICAL FIELD

The present disclosure relates to taxiing systems for aircraft.

### BACKGROUND

Traditionally, when taxiing, an aircraft uses thrust from its main engine or engines to move the aircraft. More recently, however, taxiing systems have been proposed which allow an aircraft to taxi without using main engine thrust. This provides a number of advantages, for example reducing aircraft fuel consumption, eliminating push back (tug) cost, reducing engine wear and foreign object damage, reducing airport emissions so improving in cabin air quality, and improving airport operation flexibility (less noise, less gate blocking, reduced thrust zones..

Typically such taxiing systems comprise a motor which is coupled to or integrated with a landing gear wheel so as to drive that wheel under power, for example generated by an auxiliary power unit (APU) of the aircraft or to a battery or other energy storage device, for example a KERS device. This avoids the need to run the main engines to effect taxiing.

However, such systems have potential disadvantages. For example, incorporating a drive motor in a landing gear wheel may take up space normally occupied by brake discs, which mean that a reduced number of brake discs may have to be used, thereby putting additional strain on the remaining brake discs.

Also, during flight, landing gearwheels are not required to rotate. However, upon landing, the landing gear wheels are almost instantaneously accelerated up to landing speed of the aircraft. This may cause damage to any motor coupled to the landing gear wheel. Moreover, any clutch mechanism provided to disconnect the motor from the landing gearwheel may be vulnerable to adverse environmental conditions such as ice, water, grit and heat while still having to remain extremely reliable to ensure yaw stability upon landing..

The present disclosure seeks to provide an alternative taxiing system.

### SUMMARY

There is disclosed herein a taxiing system for an aircraft comprising landing gear, the system comprising a drive wheel mounted to and selectively deployable relative to the landing gear for engaging the ground and moving the aircraft along the ground.

Thus a separate drive wheel is proposed for taxiing the aircraft. The use of a separate drive wheel allows the aircraft to be taxied without use of the main aircraft engines. Moreover, the drive wheel can be deployed only when taxiing is required, meaning that it may be maintained in a retracted position when not required, for example during landing of the aircraft, thereby avoiding rapid acceleration of the drive wheel and possible attendant damage thereto.

The drive wheel is provided with a drive motor. The drive motor may be mounted to the drive wheel or incorporated therein, for example as a hub motor. A hub motor may provide a fully enclosed system with little or no exposure to foreign object damage.In embodiments the drive motor may be an electric motor and may be powered, for example, by the aircraft auxiliary power unit (APU). In other embodiments, the motor could also be powered by a separate power source such as a battery or fuel cell. It is envisioned that the drive electronics for an electrical motor embodiment could be shared with the drive electronics for another actuation system, for example the main landing gear extend/retract system, or the high lift PDU. In yet further alternative embodiments, the drive motor may be a hydraulic motor.

The drive motor may either drive the drive wheel directly or via gearing, for example epicyclic gearing. Gearing may not be required if the motor is able to develop sufficient drive torque for the wheel.

The taxiing system may further comprise an actuator for selectively deploying the drive wheel to its drive position and retracting the drive wheel to a non-drive position.

The actuator may, for example, be a hydraulic or an electric actuator.

In a particular embodiment, the drive wheel may be pivotally deployed. A linkage may be provided between the actuator and the drive wheel.

In one embodiment, the linkage may comprise a support element comprising a first arm attached at one end to the landing gear the strut and a second arm attached at one end to one end of the actuator, and a drive arm pivotally mounted at one end with respect to the support element and drivingly coupled at that end to the drive wheel and attached at its other end to another end of the actuator.

The drive arm may be coupled to the drive wheel by means of a drive shaft and one or more drive wheel support arms coupled to the drive shaft.The end of the second arm of the support element attached to the actuator may also be attached to the landing gear, for additional support. Where the landing gear incorporates a telescopic strut, the attachment may comprise a linkage may be which accommodates relative movement of the two parts of the strut.

The drive wheel may be mounted in any suitable position relative to the landing gear wheels. In an embodiment, the drive wheel may be mounted between adjacent wheels of a landing gear assembly. In other embodiments, the drive wheel may be positioned adjacent a landing gear wheel. In embodiments, the drive wheel is mounted to a main landing gear assembly, but in an alternative arrangement, the drive wheel may be mounted to a nosewheel assembly.

It will be understood that there is also disclosed herein landing gear which includes the above taxiing system.

As a safety measure, to prevent premature deployment of the drive wheel, an interlock may be provided to prevent deployment of the drive wheel while there is no weight on the landing gear and/or while the ground speed of the aircraft is above a predetermined value.

It will also be appreciated that there is also disclosed herein a method of taxiing an aircraft comprising selectively deploying a drive wheel mounted on a landing gear of the aircraft into contact with the ground when taxiing of the aircraft is required.

The method may further comprise retracting the drive wheel after taxiing is no longer required. The drive wheel may be retracted, for example during main engine warm up prior to take off.

The method may further comprise deploying the drive wheel after the aircraft has landed. The deployment may occur after the ground speed of the aircraft has fallen below a predetermined value.

### BRIEF DESCRIPTION OF DRAWINGS

The above and other aspects of the invention will now be described, by way of example only, with reference to the accompanying drawings in which:
Figure 1 shows a part-cutaway, side view of an embodiment of a taxiing system in a retracted configuration;
Figure 2 shows the taxiing system of Figure 1 in an engaged configuration;
Figure 3 shows a rear view of the taxiing system;
Figure 4 shows a part-cutaway, perspective view of the taxiing system.

### DETAILED DESCRIPTION

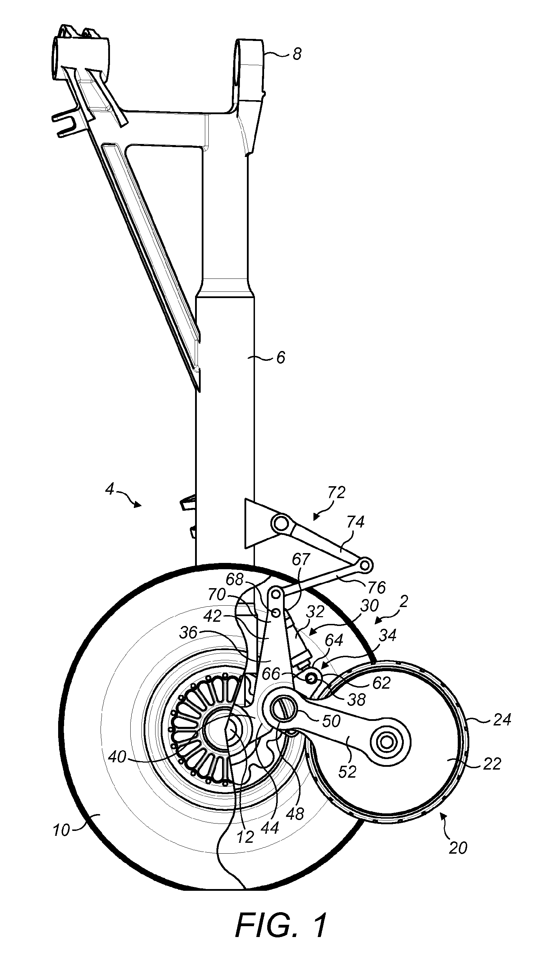

With reference to Figures 1 to 4, an aircraft taxiing system 2 is shown incorporated in an aircraft landing gear 4, in this particular embodiment a main landing gear 4 of an aircraft.

As is conventional, the landing gear 4 comprises a strut 6 which is attached at one end to an aircraft (not shown) by means of a pivot 8 and which, at its other end, mounts two main gear wheels 10 about an axle 12. The strut 6 in this embodiment is a telescopic oleo strut which allows damping of forces applied to the landing gear 4, for example during landing.

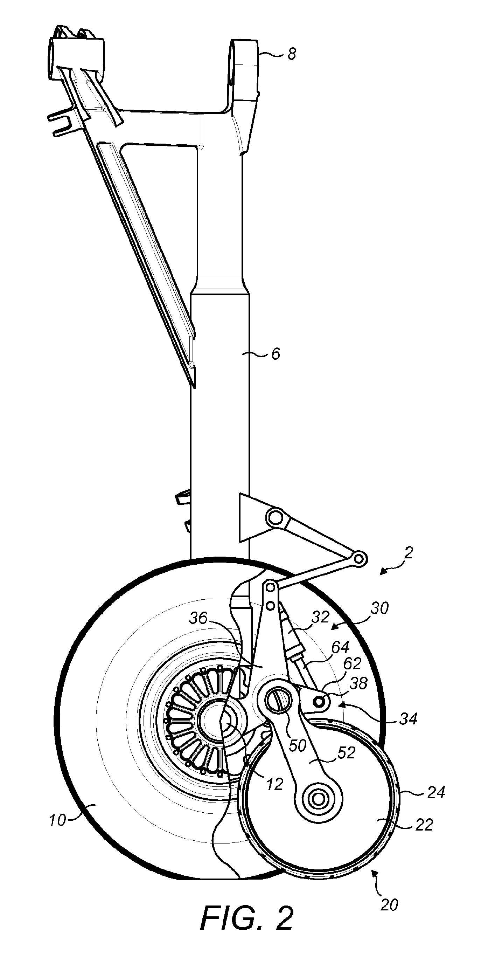

The taxiing system includes a drive wheel 20 which is positioned between the two main gear wheels 10. The drive wheel 20 is selectively deployable relative to the landing gear between a retracted position (as shown in Figure 1), where the drive wheel 20 does not contact with the ground, and a deployed position (as shown in Figure 2), where the drive wheel 20 is in contact with the ground.

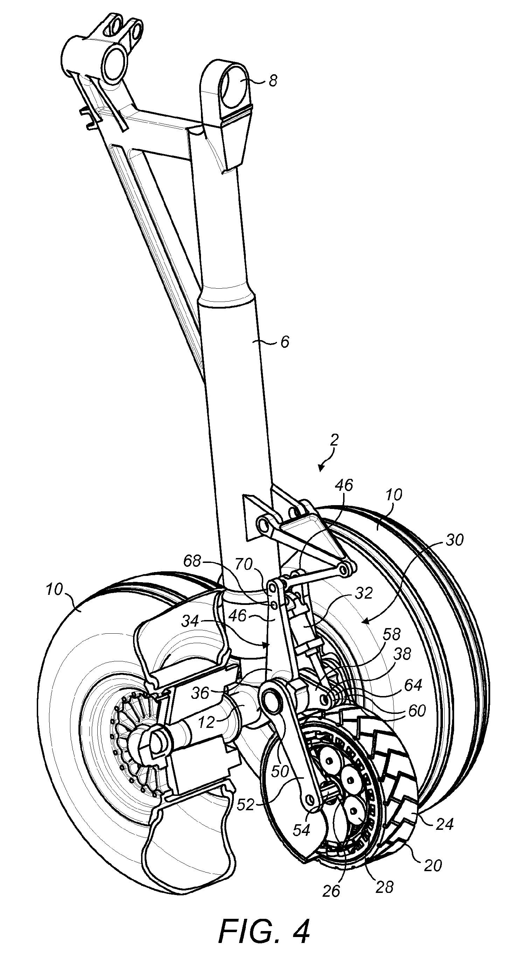

The drive wheel 20 includes a wheel hub 22 and a tyre 24. As seen in Figure 4, the wheel hub 22 contains a hub motor 26 and epicyclic gearing 28. The hub motor 26 is in this embodiment an electric hub motor and is of such a size and power as to be able to generate, through the gearing 28, enough torque to drive the drive wheel 20 so as to taxi an aircraft. While epicyclic gearing 28 is illustrated, this may not be necessary, depending on the particular power and operational rotational speeds of the hub motor 26. Electric hub motors are well known, so further detail of such motors need not be given here.

The hub motor 26 is, in this embodiment, powered by electrical power generated by the aircraft's auxiliary power unit (APU), although other sources of power may be used. The hub motor 26 could also be a hydraulic motor in other embodiments.

A wheel actuation assembly 30 moves the drive wheel 20 between its retracted position and its deployed position. The wheel actuation system 30 comprises an actuator 32 and an associated linkage 34.

The actuator 32 is in this embodiment a hydraulic actuator, but other actuators, for example electromechanical actuators, may also be used.

The linkage 34 comprises a generally L-shaped support element 36 and a drive arm 38. The support element 36 has a first arm 40 which is non-rotatably mounted to the axle 12 supporting the landing gearwheels 10 and a second arm 42 extending generally upwardly from the first arm 40. The first arm 40 comprises a pair of spaced apart, generally parallel first arm elements 44 and the second arm comprises a pair of spaced apart, generally parallel second arm elements 46. The respective first and second arm elements 44, 46 are suitably connected together so as to move together.

The support element 36 is provided with a bore 48 at the nexus of the first and second arms 40, 42. The bore 48 rotatably mounts a drive shaft 50 which extends outwardly of the support element 36 for engagement with one end of a pair of wheel support arms 52. The wheel support arms 52 are splined or otherwise non-rotationally coupled to the drive shaft 50 so as to rotate therewith. The other ends of the wheel support arms 52 support the drive wheel 20, for example by a shaft 54.

A central portion of the drive shaft 50 is splined or otherwise non-rotationally coupled to a first end 58 of the drive arm 38. The drive arm 38 is constructed with two parallel drive arm elements 60, suitably joined together.

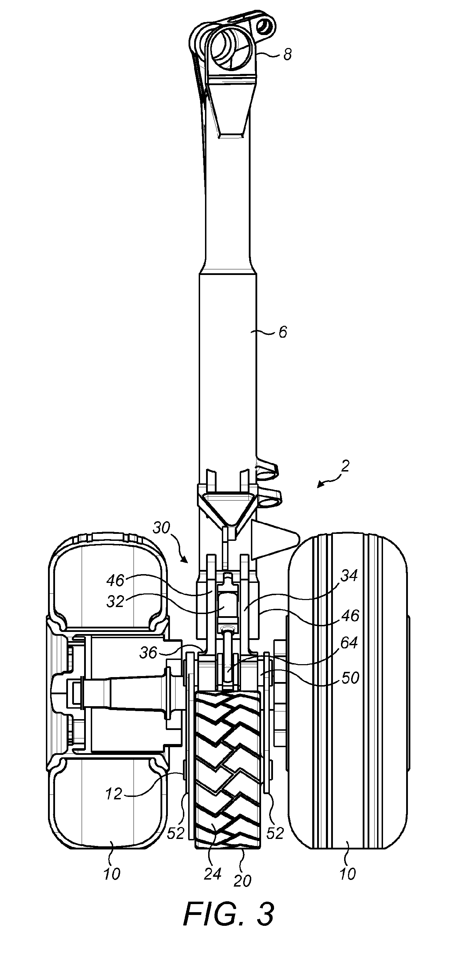

The opposite second end 62 of the drive arm 38 is connected to one end 64 of the actuator 32, for example via a pin joint 66. In fact the one end 64 of the actuator 32 is received between the first and second drive arm elements 60 as can be seen in Figures 3 and 4.

A second, opposite end 67 of the actuator 32 pivotally attached, for example via a pin joint 68, to the upper end 70 of the first arm 40 of the support element 36. In fact, the second end 67 of the actuator 32 is received between the first and second first arm elements 46, as shown in Figures 3 and 4.

A further linkage 72 is attached between the upper end 70 of the first arm 40 of the support element 36 and the strut 6. This further linkage 72 simply comprises two pivotally joined elements 74, 76 attached to the first arm 40 and strut 6 respectively. This further linkage 72 provides some lateral stability to the support element 36. A pivotal linkage is required since the first arm 40 of the support element 36 is attached to the axle 12 which is mounted to a stub shaft which is received slidably and telescopically in the lower end of the strut 6.

Operation of the taxiing system 2 will now be described.

When it is desired to deploy the drive wheel 20 from the retracted position shown in Figure 1, the actuator 32 is operated. Actuation of the actuator 32 causes the drive arm 38 to pivot in a clockwise direction in the sense of Figure 1. As the drive arm 38 is splined to the drive shaft 50, it too rotates in the bore 50, thereby also causing the wheel support arms 52 to rotate in a clockwise direction, thereby pivoting the drive wheel 20 into contact with the ground, as shown in Figure 2. The force exerted by the actuator 32 is such as to force the drive wheel into contact with the ground with sufficient force to create a good frictional engagement between the drive wheel 20 and the ground. The drive wheel may then be locked in position by locking means (not shown), or maintained in position by continued application of force by the actuator 32.

The hub motor 26 may then be energised from the appropriate power source. The hub motor 26 is mounted statically with respect to the wheel support arms 52 such that its operation causes the rotation of the drive wheel 20, thereby moving the landing gear 4, and thus the aircraft, along the ground.

During taxiing, for example when travelling from an aircraft terminal to a runway, the main landing gear wheels 10 are in contact with the ground and support most of the weight of the aircraft. The drive wheel 20 does not need to support significant weight and need only be sufficiently biased onto the ground to create the necessary frictional engagement with the ground.

It is envisioned that the drive wheel 20 would be retracted into the retracted position (shown in Figure 1) at the end of the taxi phase, for example while the main engines warm up prior to take off. This would mean that the system would only need to be capable of limited ground speeds, i.e. taxiing speeds rather than higher speeds which would be encountered during take-off. The retraction would be effected by operation of the actuator 32.

The drive wheel 20 may then remain retracted during the flight and also during landing. A safety interlock may be provided to prevent deployment of the drive wheel 20 while there is no weight on the landing gear wheels. This will ensure that the drive wheel 20 is clear of the ground during landing. After landing, for example when the aircraft ground speed has fallen below a predetermined value, the drive wheel 20 is deployed once more into contact with the ground in order to taxi the aircraft from the runway to a terminal, for example. Thus the drive wheel 20 is not in contact with the ground until after landing, meaning that it will not be subjected to potentially detrimental forces during landing.

It will be appreciated that the above is a description of just a one embodiment and that various modifications may be made thereto. For example, it will be appreciated that the drive wheel 20 could also be used with other landing gearwheel configurations, for example 4 wheel or 6 wheel configurations. Also, in the presence of a sufficiently high torque hub motor, instead of using an epicyclic gear transmission the hub motor could drive the wheel directly. Furthermore, the drive wheel need not be mounted on the main landing gear but could instead be mounted on a nosewheel. The latter will only be appropriate in aircraft which support sufficient aircraft weight through the nose wheel.

Moreover, the drive wheel 20 may be deployed in a non-pivotal manner, for example along a linear or otherwise curved path.

It will also be appreciated that the system may be incorporated as original equipment in landing gear, or indeed retrofitted to existing landing gear. The particular arrangement shown makes use of space available between landing gearwheels and would not require major modification of surrounding components. Thus, for example, braking systems and tyre and wheel replacement features may remain unchanged.

It will also be understood that a taxiing system described may be applied to just one landing gear or to more than one landing gear, for example to both main landing gear.

## Claims

1. A taxiing system (2) for an aircraft comprising landing gear (4), the system comprising a drive wheel (20) mounted to and selectively deployable relative to the landing gear (4) for engaging the ground and moving the aircraft along the ground.

2. The taxiing system as claimed in claim 1, wherein the drive wheel (20) incorporates a drive motor (26).

3. The taxiing system as claimed in claim 2, wherein the motor (26) is a hub motor.

4. The taxiing system as claimed in claim 2 or 3, wherein the motor (26) is an electric motor.

5. The taxiing system as claimed in any of claims 2 to 4, wherein the drive motor (26) drives the drive wheel (20) through gearing (28).

6. The taxiing system as claimed in any preceding claim, further comprising an actuator (32) for selectively deploying the drive wheel (20) to its drive position and retracting the drive wheel (32) to a non-drive position.

7. The taxiing system as claimed in any preceding claim, comprising a linkage (34) between the actuator (32) and the drive wheel (20) for pivotally deploying the drive wheel (20).

8. The taxiing system as claimed in claim 7, wherein the linkage (34) comprises a support element (36) comprising a first arm (40) attached at one end to the landing gear (4) and a second arm (42) attached at one end to one end of the actuator (32), and a drive arm (38) pivotally mounted at one end with respect to the support element (36) and drivingly coupled at that end to the drive wheel (20) and attached at its other end to another end of the actuator (32).

9. The taxiing system as claimed in any preceding claim, wherein the drive wheel (20) is mounted between adjacent wheels (10) of a landing gear assembly.

10. The taxiing system as claimed in any preceding claim, wherein the drive wheel (20) is mounted to a main landing gear.

11. The taxiing system as claimed in any preceding claim, further comprising means to prevent premature deployment of the drive wheel (20), for example while there is no weight on the landing gear wheels (10).

12. Aircraft landing gear comprising a taxiing system (2) as claimed in any preceding claim.

13. A method of taxiing an aircraft comprising selectively deploying a drive wheel (20) mounted on a landing gear (4) of the aircraft into contact with the ground when taxiing of the aircraft is required.

14. The method as claimed in claim 13, further comprising retracting the drive wheel (20) after taxiing is no longer required.

15. The method as claimed in claim 13 or 14, further comprising deploying the drive wheel (20) after the aircraft has landed, for example after the ground speed of the aircraft has fallen below a predetermined value.
